# EUROPEAN PATENT SPECIFICATION

(11) **EP 3 537 865 B1**
(45) Date of publication and mention of the grant of the patent: **25.11.2020**
(21) Application number: 17809371.2
(22) Date of filing: 31.10.2017
(51) Int. Cl.: A01D 34/86, A01B 73/00, A01B 63/24

(54) **MOVEMENT SYSTEM FOR ANY FARMING MACHINERY**
BEWEGUNGSSYSTEM FÜR LANDWIRTSCHAFTLICHE MASCHINEN
SYSTÈME DE MOUVEMENT POUR N'IMPORTE QUELLE MACHINE AGRICOLE

(30) Priority: 10.11.2016 IT 201600113433
(43) Date of publication of application: 18.09.2019
(73) Proprietor: Corsetti, Claudio, 03032 Arce (FR) (IT); Corsetti, Antonio Giuseppe, 03032 Arce (FR) (IT)
(72) Inventor: Corsetti, Claudio, 03032 Arce (FR) (IT); Corsetti, Antonio Giuseppe, 03032 Arce (FR) (IT)
(74) Representative: Fiammenghi, Eva
(86) International application number: PCT/IB2017/056747
(87) International publication number: WO 2018/087623

(56) References cited:
- EP-A1- 0 514 314
- EP-A1- 1 097 626
- DE-A1- 3 545 712
- DE-U1- 29 908 429
- US-A1- 2015 077 557

## Description

### Field of the invention

The present invention relates to the field of heavy machinery operated by an operator within an agricultural means of transport, such as a tractor or an excavator. In particular, this machinery is used in agriculture, but this does not exclude the application of the present invention in different fields, such as snow machines.

### Prior art

Several machines are currently known, adapted to perform various functions in the agricultural sector. In order to make the object of the present invention clear, the problems relating to the use of a common shredder will be described, as they are problems similar to any other machinery used to date for the maintenance of green spaces and fields. The problem to be solved is purely mechanical in nature, relating to the movements and inclinations that the functional heads should take when in use; for this reason, the present invention is applicable to any functional group, especially to shredders.

Shredders, whose working width can range from just over 1 meter to nearly 10 meters, find wide applications in open-field agriculture, such as orchards and vineyards, and in the maintenance of verges, they are used in mowing lawns, in control of herbs within orchards, on roadsides, on golf courses or to grind the pruning residues left in the soil after harvest. The gear core is a horizontal rotor on which the knives are placed, of different types depending on the material to be shredded. The most widespread shredder model consists of a shredding group connected to the power take-off of the tractor to which it is connected with a three-point attachment. Depending on the type of usage, at present, one is forced to choose between two types of shredders: with internal transmission box or with external transmission box with respect to the overall dimensions of the farming tractor carrying the machine. These two design versions have been designed for the problem of the dimensions of the coupling joint inside the three-point attachment that connects the power take-off of the tractor to the power take-off of the machine. The coupling joint motion undergoes two phases: a lateral shift off the roadway and one of machine rotation which normally ranges from +90° to -65° with respect to the road surface.

It is important, to understand the construction problems, to specify that the width of the 3-point attachment cannot be varied as it is bound by precise international safety norms.

In one of the two existing shredder models, the transmission box is located within the overall dimensions of the machine. This benefits the full return on track but the full exit is not possible. A part of the shredder will always remain hidden behind the wheel of the tractor that precedes it. A machine with these movement features is very efficient for works within the roadway or slightly displaced, but does not work at the best for works completely outside of the tractor track, such as in the maintenance of roadsides.

The other option involves the insertion of the transmission box outside the track of the machine, resulting in opposite features with respect to the machine just described. In this case, in fact, advantage is given to the total exit of the functional group (shredder) out of the track of the tractor, but no longer to its return, leaving a portion of the machine constantly outside the overall dimensions of the tractor wheel. This affects not only the works on track, no longer possible due to the constant dimensions external to the wheel, but also road transport because it increases the maximum size permitted by law for road transport, and one is obliged to vertical transport.

The movement problem just described is currently solved with a hydraulic transmission model that involves a substantial increase in the cost of machinery.

The various international patents in the field of agricultural machinery have never been able to solve this criticality of the industry, focusing more on the theme of energy saving (and thus fuel) of the locomotive vehicle or of the cutting quality. Some examples are patents RU 2457665, RU 2550655 and RU 2350388, all Russian.

EP 1097626 discloses a movement system for any one farming machinery, able to perform a first lateral translation and a second rotation movement but the transmission box is not inserted in the rotation group.

The object of the present invention is to solve the above problem by describing a new and innovative movement system of the functional group that allows both the complete lateral exit and the possibility of the total return within the roadway, in a more simple way.

A further object of the present invention is to allow such movement through a mechanical and not hydraulic solution, consequently being able to contain the machine production cost.

### Description of the invention

The technical problem is solved by means of a movement system according to claim 1. According to the present invention, a movement system 10 is provided, applicable to any farming machinery, provided with features which make it fully functional for its intended purpose. More in detail, said movement system 10 is specifically designed for a shredding head carried by a common farming tractor 1, but this does not in any way limit its application to different functional heads and various means of locomotion such as, for example, excavators.

A functional head 6 is operatively connected to a farming tractor 1 by means of a three-point attachment 2 and a rigid arm 7, whose dimensions and features are bound by precise international safety standards. Said three-point attachment 2, said rigid arm 7 and the rotation group 5, are responsible for two consecutive movements: a first lateral translational movement and a second rotational movement which can be performed both upwards and downwards (clockwise or counter-clockwise direction).

According to the invention, said movement system 10 is provided with a transmission box 3 inserted inside the rotation group 5 which determines said movements of said functional head 6. Moreover, said rotation group 5 is suitably positioned with respect to said functional head 6 so as to translate reversibly, during said first lateral translation movement, following a horizontal trajectory G, parallel to the ground.

The main advantage of the subject movement system 10 consists in that said functional head 6 and any other component of the system connected thereto can assume a first retracted configuration in which they are located within the road encumbrance determined by tractor 1 on which they are installed. This involves the possibility to operate the functional head 6 even within a narrow track, while carrying it. As a result of said first lateral translation movement, said functional head 6 and any other component of the system connected thereto can assume a second shifted configuration, in which said functional head 6 and any other component of the system associated thereto are completely outside the road encumbrance of tractor 1 which carries them. In this way, the functional head 6 can work efficiently also on roadsides or in any other work situation where it is necessary to considerably exit from the roadway of tractor 1.

Due to the configuration of the movement system 10 just described, said second rotation movement allows complete rotations of 360° both clockwise and counter-clockwise of said functional head 6. This is because the center of rotation 4 of said rotation movement coincides with the position of said transmission box 3.

Also in a version of the present invention characterized by a slight shift of said transmission box 3 with respect to the center of rotation 4, the same advantages illustrated above are achieved.

In one version of the present invention, it is possible to set predetermined stopping points to said second rotational movement, in particular, an upper stopping point, which coincides with an angle of maximum upward rotation α equal to 90°, and a lower stopping point, which coincides with an angle of maximum downward rotation β equal to -65°. Advantageously, since said movement system 10 applicable to any type of functional head 6, said rotation group 5 may be provided with a common coupling system adapted to be mechanically connected, in a stable and reversibly manner, with any functional head 6 provided with a corresponding coupling device.

Due to this provision, the operator, from the inside of tractor 1, will be able to advantageously approach as much as possible the coupling device placed on the rotation group 5 to the corresponding coupling device placed on the functional head 6, and then descend from tractor 1 and with a few simple moves stably engage the two parts. Optionally, said movement system 10, at said coupling device, may be advantageously provided with a common micro-camera which transmits images to a screen placed inside the passenger compartment of tractor 1. This is to allow the maximum approach and the maximum control of the approach movement of said rotation group 5 to the functional head 6 to be connected.

A further additional provision of the subject movement system 10 consists of a common automatic positioning system that would allow stably retaining said functional head 6 at a preset distance from the ground.

### Description of the figures

The invention will hereinafter be described in at least one preferred embodiment thereof by way of non-limiting example with the aid of the accompanying figures, in which:
- FIGURE 1 shows a three-dimensional view of a movement system 10 for a functional head 6 connected to the agricultural tractor (not shown) via a three-point attachment 2 and a rigid arm 7. It is seen that the transmission box 3 is inserted inside the rotation group 5. The figure also shows, with reference numeral 4, the center of rotation of the functional head 6.
- FIGURE 2 shows another three-dimensional view that provides an additional point of view from which are clearly recognizable the rigid arm 7, the functional head 6 and the transmission box 3 inside the rotation group 5.
- FIGURE 3 shows a front view of the device made with the movement system 10 of the present invention in which the transmission box 3 is seen almost at the center of the rotation group 5, which is located at one end of the functional head 6, the rigid arm 7 is also visible.
- FIGURE 4 shows the machinery provided with the subject movement system 10 in an operating step in which the functional head 6 is positioned in lateral output. It is seem that it is completely outside of the encumbrance of tractor 1 carrying it.
- FIGURE 5 shows how the machine according to the present invention is able, in the retracted position, to be perfectly in the roadway of tractor 1 carrying it, without any lateral protrusion.

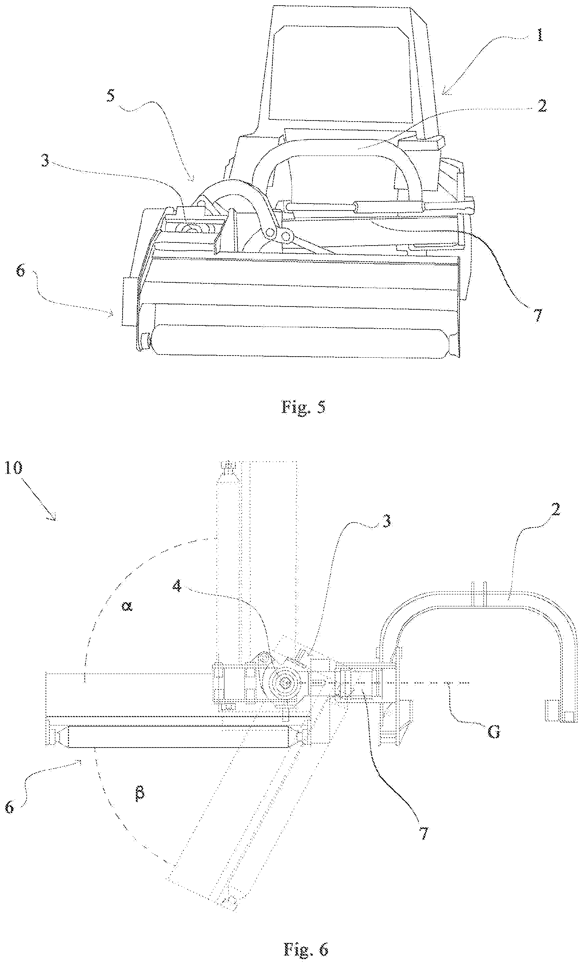

- FIGURE 6 is a diagram that illustrates the movements of the movement system 10 of the present invention. In particular, the functional head 6 is shown in complete lateral protrusion due to the action of the rigid arm 7. From the position with respect to the three-point attachment 2 it can be seen that, in this configuration, the functional head 6 is outside the encumbrance of the farming tractor (not shown for reasons of clarity). The dashed line represents trajectory G of the rotation group 5 which, as shown, moves exclusively along an axis parallel to the ground. The dotted lines represent the maximum angles of operation of the functional head, α upward and β downward. It is clearly visible from the image that the rotation group 3, in any configuration of the functional head 6, remains stationary and only rotates around its central axis coincident with the center of rotation 4, inside the rotation group 5.

### Detailed description of the invention

The present invention will now be described purely by way of non-limiting or binding example with the aid of the figures, which illustrate some embodiments relative to the present inventive concept.

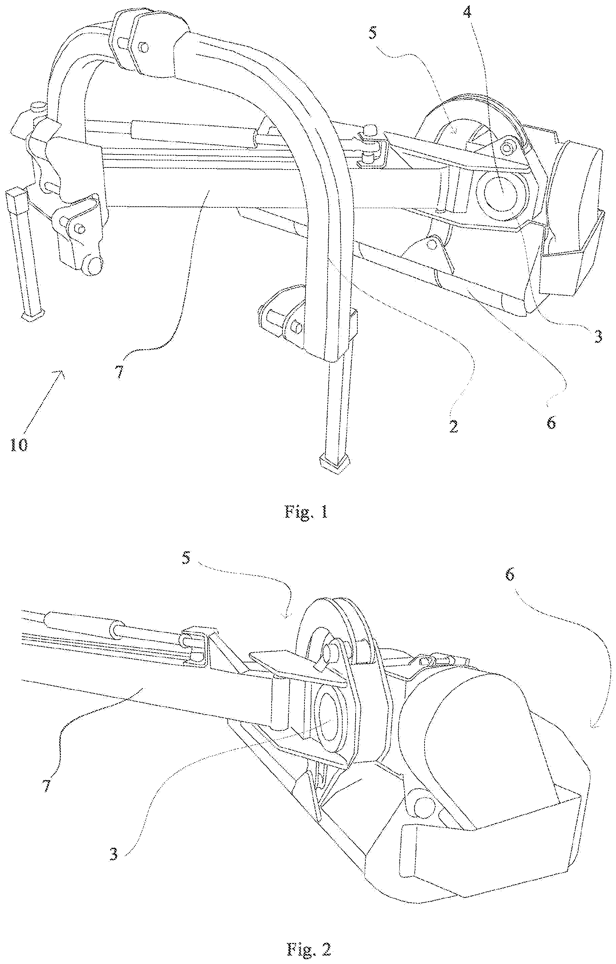

With reference to FIG. 1, an agricultural machinery is shown, provided with the movement system 10 object of the present invention. It is a shredding head 6 connected to a common three-point attachment 2 and to a rigid arm 7 which, in this case, is depicted resting on the ground, and thus disconnected from tractor 1 which, in operating conditions, carries the assembly. FIG. 1 and FIG. 2 show the constituent components of the movement system 10 of the present invention. More in detail, the transmission box 3 is inserted into the rotation group 5 so that, during the rotational movement of the shredding head 6, the center of rotation 4 coincides precisely with the position of said transmission box 3.

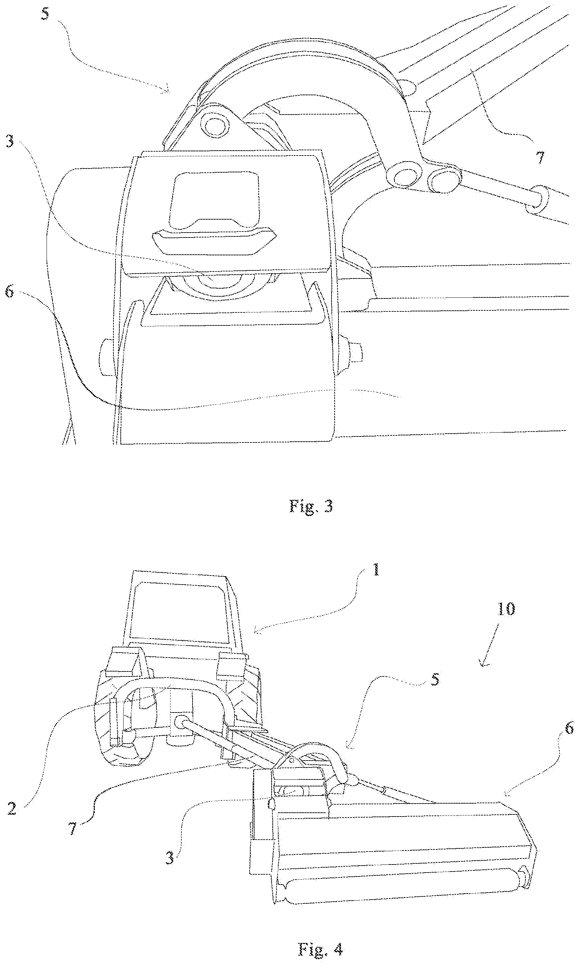

FIG. 3 shows a more detailed front view of the subject movement system 10, in which the precise position of the transmission box 3 within the rotation group 5 is shown.

The following figures show the movements that the present system allows the shredding head 6 with respect to tractor 1 which transports it. From said images, it can be easily seen that the present invention effectively solves the problems set out above related to the fact that, at present, one must choose between a machine able to completely exit from the roadway and one able to fit completely within the road dimensions of the tractor. With this movement system 10, the first lateral translational movement is characterized by two configurations: a first retracted configuration (FIG. 5) in which said shredding head 6 and any other component of the movement system 10 associated therewith are located within the road encumbrance determined by tractor 1, which carries them; and a second translated configuration in which, due to the first lateral translational movement carried out by the rigid arm 7, the shredding head 6 is located completely outside the road footprint of tractor 1. With reference to FIG. 6, the second rotational movement in a clockwise or counter-clockwise direction is shown. The dashed line represents trajectory G of the rotation group 5 during said first lateral translational movement towards said second shifted configuration. Starting from this configuration, said coincidence of the center of rotation 4 with said transmission box 3, inside the rotation group 5, determines the possibility for the shredding head 6 to rotate by 360° both in clockwise and in counter-clockwise direction. Angles α and β represent the two preferred stopping points, upper and lower, which can be set to limit said second rotation movement at the angles useful for the work to be performed. By way of non-limiting example, the upper stopping point may coincide with an angle of maximum rotation α = 90° and the lower stopping point may coincide with an angle of maximum rotation β = - 65°.

It is noted that, in order to obtain the same functional effect, the transmission box 3 may also be slightly offset from the center of rotation 4 of the rotation group 5.

The images refer to a medium-sized shredder, but this does not limit in any way the application of the present movement system 10 to different functional heads 6, weighing between 50 kg and 1,500 kg.

As a further possibility to make the present invention even more versatile and applicable to the most various agricultural machines and the like, the rotation group 5 may be provided with a common coupling system adapted to connect mechanically, in a stable and reversible manner, with any functional head 6 provided with a corresponding coupling device. In addition, a camera may be placed at the coupling device in order to transmit the images to a screen placed inside the passenger compartment of tractor 1. In this way the operator that, inside the passenger compartment of tractor 1, wishes to connect said coupling device with any functional head 6 provided with a compatible coupling system, should simply move as much as possible to the rotation group 5 close to the functional head 6, possibly with the help of the images taken by the camera. In this way, once the approach has been completed, it will be sufficient to get off the means of transport to carry out the last connection operations of the two parts, in a much simpler and faster manner than as has been done up to now.

During the work phase, it is also possible to maintain the functional head 6 at a predetermined distance from the ground due to a common automatic positioning system. Finally, it is clear that modifications, additions or variants may be made to the invention described thus far which are obvious to a man skilled in the art, without departing from the scope of protection that is provided by the appended claims.

## Claims

1. Movement system (10) for any one farming machinery, constituted by a support structure provided with a three-point attachment (2) adapted to operatively connect, by means of a rotation group (5), a common farm tractor (1) to a functional head (6), causing a first lateral translation movement thereof and, subsequently, a second rotation movement in clockwise or counter-clockwise sense with respect to the center of rotation (4); said functional head (6) being adapted to be arranged in a first collapsed configuration, in which said functional head (6) is situated within the overall road size determined by the tractor (1) on which it is installed; and to assume a second translated configuration, obtained due to the movement of the functional head (6) along the trajectory (G), **characterized in that** said functional head (6) is situated outside the overall road form of the tractor (1) on which it is installed; said rotation group (5) being suitably positioned with respect to said functional head (6) in a manner so as to reversibly translate along the trajectory (G) parallel to the ground; said movement system (10) comprising a rigid arm (7) connecting said three point attachment (2) with said rotation group (5), said movement system (10) being **characterized in that** it is provided with:
a common transmission box (3) inserted in said rotation group (5) which, due to the action of said rigid arm (7), causes said first lateral translation movement and, due to the action of said rotation group (5), said second rotation movement in clockwise or counter-clockwise sense of said functional head (6) around the center of rotation (4);
said second rotation movement allows complete rotations of 360°, both in clockwise sense and in anticlockwise sense, of said functional head (6), due to the coincidence of the center of rotation (4) with the rotation axis of said transmission box (3) inside said rotation group (5).

2. Movement system (10) for any one farming machinery, according to claim 1, **characterized in that** the position of said transmission box (3) inside said rotation group (5) coincides with or is slightly off-center with respect to said center of rotation (4).

3. Movement system (10) for any one farming machinery, according to any one of the preceding claims, **characterized in that** said rotation group (5) is adapted to allow the upward rotation of said functional head (6) to an upper stop point coinciding with a maximum rotation angle (α) equal to 90°.

4. Movement system (10) for any one farming machinery, according to any one of the preceding claims, **characterized in that** said rotation group (5) is adapted to allow the downward rotation of said functional head (6) to a lower stop point coinciding with a maximum rotation angle (β) equal to -65°.

5. Movement system (10) for any one farming machinery, according to any one of the preceding claims, **characterized in that** said functional head (6) has shredder function.

6. Movement system (10) for any one farming machinery, according to any one of the preceding claims, **characterized in that** it is applicable on already existing tractors or excavators.

7. Movement system (10) for any one farming machinery, according to any one of the preceding claims, **characterized in that** said rotation group (5) is provided with a coupling system adapted to be connected, in a stable but reversible manner, with any one functional head (6) with weight comprised between 50 kg and 1500 kg.

8. Movement system (10) for any one farming machinery, according to any one of the preceding claims, **characterized in that** said rotation group (5) is provided with a common coupling system adapted to be mechanically connected, in a stable and reversibly manner, on an already existing functional head (6) provided with a corresponding coupling device.

9. Movement system (10) for any one farming machinery, according to the preceding claim 8, **characterized in that** it is provided with a camera placed at the coupling device of said rotation group (5) with said functional head (6); said camera being adapted to transmit the images to a screen placed inside the cabin of the tractor (1) in order to allow the maximum approach of said rotation group (5) to the functional head (6) to be connected.

10. Movement system (10) for any one farming machinery, according to any one of the preceding claims, **characterized in that** the functional head (6) is maintained at a predetermined distance from the ground due to a common automatic positioning system.

## Patentansprüche

1. Bewegungssystem (10) für eine beliebige Landmaschine, konstituiert durch eine Trägerstruktur, die mit einer Dreipunktbefestigung (2) versehen ist, die geeignet ist, mittels einer Rotationsgruppe (5), einen gewöhnlichen Traktor (1) mit einem Funktionskopf (6), eine erste seitliche Translationsbewegung hiervon und nachfolgend eine zweite Rotationsbewegung im Uhrzeigersinn oder gegen den Uhrzeigersinn in Bezug auf das Rotationszentrum (4) bewirkend, funktionell zu verbinden; wobei der Funktionskopf (6) dazu angepasst ist, in einer ersten zusammengeklappten Konfiguration angeordnet zu werden, in der sich der Funktionskopf (6) innerhalb der Gesamtstraßengröße befindet, die durch den Traktor (1) bestimmt wird, auf dem er installiert ist; und eine zweite versetzte Konfiguration, die durch die Bewegung des Funktionskopfes (6) entlang der Trajektorie (G) erhalten wird, anzunehmen, **dadurch gekennzeichnet, dass** sich der Funktionskopf (6) außerhalb der Gesamtstraßenform des Traktors (1), auf dem er installiert ist, befindet; wobei die Rotationsgruppe (5) in Bezug auf den Funktionskopf (6) in einer Weise geeignet so positioniert ist, dass sie sich entlang der Trajektorie (G) parallel zum Boden reversibel verschiebt; wobei das Bewegungssystem (10) einen starren Arm (7) aufweist, der die Dreipunktbefestigung (2) mit der Rotationsgruppe (5) verbindet, wobei das Bewegungssystem (10) **dadurch gekennzeichnet ist, dass** es versehen ist mit:
einem gewöhnlichen Getriebegehäuse (3), das in die Rotationsgruppe (5) eingesetzt ist, das durch die Wirkung des starren Arms (7) die erste seitliche Translationsbewegung bewirkt und durch die Wirkung der Rotationsgruppe (5) die zweite Rotationsbewegung des Funktionskopfes (6) um das Rotationszentrum (4) im Uhrzeigersinn oder gegen den Uhrzeigersinn bewirkt; wobei die zweite Rotationsbewegung aufgrund des Zusammenfallens des Rotationszentrums (4) mit der Drehachse des Getriebegehäuses (3) innerhalb der Rotationsgruppe (5) vollständige Drehungen des Funktionskopfes (6) von 360° sowohl im Uhrzeigersinn als auch gegen den Uhrzeigersinn ermöglicht.

2. Bewegungssystem (10) für eine beliebige Landmaschine gemäß Anspruch 1, **dadurch gekennzeichnet, dass** die Position des Getriebegehäuses (3) innerhalb der Rotationsgruppe (5) mit dem Rotationszentrum (4) zusammenfällt oder in Bezug auf das Rotationszentrum (4) leicht außermittig ist.

3. Bewegungssystem (10) für eine beliebige Landmaschine gemäß einem der vorhergehenden Ansprüche, **dadurch gekennzeichnet, dass** die Rotationsgruppe (5) dazu ausgelegt ist, die Aufwärtsdrehung des Funktionskopfes (6) bis zu einem oberen Stoppunkt, der mit einem maximalen Drehwinkel (α) gleich 90° zusammenfällt, zu ermöglichen.

4. Bewegungssystem (10) für eine beliebige Landmaschine gemäß einem der vorhergehenden Ansprüche, **dadurch gekennzeichnet, dass** die Rotationsgruppe (5) dazu ausgelegt ist, die Abwärtsdrehung des Funktionskopfes (6) bis zu einem unteren Stoppunkt, der mit einem maximalen Drehwinkel (β) gleich -65° zusammenfällt, zu ermöglichen.

5. Bewegungssystem (10) für eine beliebige Landmaschine gemäß einem der vorhergehenden Ansprüche, **dadurch gekennzeichnet, dass** der Funktionskopf (6) eine Häckslerfunktion besitzt.

6. Bewegungssystem (10) für eine beliebige Landmaschine gemäß einem der vorhergehenden Ansprüche, **dadurch gekennzeichnet, dass** es auf bereits vorhandene Traktoren oder Bagger einsetzbar ist.

7. Bewegungssystem (10) für eine beliebige Landmaschine gemäß einem der vorhergehenden Ansprüche, **dadurch gekennzeichnet, dass** die Rotationsgruppe (5) mit einem Kupplungssystem versehen ist, das dazu ausgelegt ist, auf eine stabile aber reversible Weise mit einem beliebigen Funktionskopf (6) mit einem Gewicht zwischen 50 kg und 1500 kg verbunden zu werden.

8. Bewegungssystem (10) für eine beliebige Landmaschine gemäß einem der vorhergehenden Ansprüche, **dadurch gekennzeichnet, dass** die Rotationsgruppe (5) mit einem gewöhnlichen Kupplungssystem versehen ist, das dazu ausgelegt ist, auf eine stabile und reversible Weise mechanisch mit einem bereits vorhandenen Funktionskopf (6), der mit einer entsprechenden Kupplungsvorrichtung versehen ist, verbunden zu werden.

9. Bewegungssystem (10) für eine beliebige Landmaschine gemäß dem vorhergehenden Anspruch 8, **dadurch gekennzeichnet, dass** es mit einer Kamera versehen ist, die an der Kupplungsvorrichtung der Rotationsgruppe (5) mit dem Funktionskopf (6) angeordnet ist; wobei die Kamera dazu angepasst ist, die Bilder an einen Bildschirm zu übertragen, der im Inneren der Kabine des Traktors (1) angeordnet ist, um die maximale Annäherung der Rotationsgruppe (5) an den anzuschließenden Funktionskopf (6) zu ermöglichen.

10. Bewegungssystem (10) für eine beliebige Landmaschine gemäß einem der vorhergehenden Ansprüche, **dadurch gekennzeichnet, dass** der Funktionskopf (6) durch ein gewöhnliches automatisches Positionierungssystem in einem vorbestimmten Abstand vom Boden gehalten wird.

## Revendications

1. Système de mouvement (10) pour n'importe quelle machine agricole, constitué par une structure de support pourvue d'une fixation à trois points (2) adaptée pour relier fonctionnellement, à l'aide d'un groupe de rotation (5), un tracteur agricole commun (1) à une tête fonctionnelle (6), causant un premier mouvement de translation latérale de pour être disposée dans une première configuration rétractée dans laquelle ladite celle-ci et, ensuite, un deuxième mouvement de rotation dans le sens des aiguilles d'une montre ou dans le sens inverse des aiguilles d'une montre par rapport au centre de rotation (4) ; ladite tête fonctionnelle (6) étant adaptée tête fonctionnelle (6) est située à l'intérieur de la taille de route hors tout déterminée par le tracteur (1) sur lequel elle est installée ; et pour adopter une deuxième configuration translatée, obtenue en raison du mouvement de la tête fonctionnelle (6) le long de la trajectoire (G), **caractérisé en ce que** ladite tête fonctionnelle (6) est située à l'extérieur de la forme de route hors tout du tracteur (1) sur lequel elle est installée ; ledit groupe de rotation (5) étant positionné de manière adéquate par rapport à ladite tête fonctionnelle (6) de manière à translater de manière réversible le long de la trajectoire (G) parallèlement au sol ; ledit système de mouvement (10) comprenant un bras rigide (7) reliant ladite fixation à trois points (2) audit groupe de rotation (5), ledit système de mouvement (10) étant **caractérisé en ce qu'**il est pourvu :
d'une boîte de transmission commune (3) insérée dans ledit groupe de rotation (5) qui, en raison de l'action dudit bras rigide (7), cause ledit premier mouvement de translation latérale et, en raison de l'action dudit groupe de rotation (5), ledit mouvement de rotation dans le sens des aiguilles d'une montre ou dans le sens inverse des aiguilles d'une montre de ladite tête fonctionnelle (6) autour du centre de rotation (4) ; ledit deuxième mouvement de rotation permet des rotations complètes à 360°, à la fois dans le sens des aiguilles d'une montre et dans le sens inverse des aiguilles d'une montre de ladite tête fonctionnelle (6), en raison de la coïncidence du centre de rotation (4) avec l'axe de rotation dans ladite boîte de transmission (3) à l'intérieur dudit groupe de rotation (5).

2. Système de mouvement (10) pour n'importe quelle machine agricole, selon la revendication 1, **caractérisé en ce que** la position de ladite boîte de transmission (3) à l'intérieur du groupe de rotation (5) coïncide avec ledit centre de rotation (4) ou est légèrement excentrée par rapport à celui-ci.

3. Système de mouvement (10) pour n'importe quelle machine agricole, selon l'une quelconque des revendications précédentes, **caractérisé en ce que** ledit groupe de rotation (5) est adapté pour permettre la rotation de ladite tête fonctionnelle (6) vers le haut jusqu'à un point d'arrêt supérieur coïncidant avec un angle de rotation maximum (α) égal à 90°.

4. Système de mouvement (10) pour n'importe quelle machine agricole, selon l'une quelconque des revendications précédentes, **caractérisé en ce que** ledit groupe de rotation (5) est adapté pour permettre la rotation de ladite tête fonctionnelle (6) vers le bas jusqu'à un point d'arrêt inférieur coïncidant avec un angle de rotation maximum β égal à -65°.

5. Système de mouvement (10) pour n'importe quelle machine agricole, selon l'une quelconque des revendications précédentes, **caractérisé en ce que** ladite tête fonctionnelle (6) a une fonction de broyeuse.

6. Système de mouvement (10) pour n'importe quelle machine agricole, selon l'une quelconque des revendications précédentes, **caractérisé en ce qu'il** est applicable sur des tracteurs ou excavateurs déjà existants.

7. Système de mouvement (10) pour n'importe quelle machine agricole, selon l'une quelconque des revendications précédentes, **caractérisé en ce que** ledit groupe de rotation (5) est pourvu d'un système de couplage adapté pour être relié, de manière stable mais réversible, à n'importe quelle tête fonctionnelle (6) d'un poids compris entre 50 kg et 1500 kg.

8. Système de mouvement (10) pour n'importe quelle machine agricole, selon l'une quelconque des revendications précédentes, **caractérisé en ce que** ledit groupe de rotation (5) est pourvu d'un système de couplage commun adapté pour être relié mécaniquement, de manière stable et réversible, sur une tête fonctionnelle (6) déjà existante pourvue d'un dispositif de couplage correspondant.

9. Système de mouvement (10) pour n'importe quelle machine agricole, selon la revendication 8 précédente, **caractérisé en ce qu'**il est pourvu d'une caméra placée sur le dispositif de couplage dudit groupe de rotation (5) avec ladite tête fonctionnelle (6) ; ladite caméra étant adaptée pour transmettre les images à un écran placé à l'intérieur de la cabine du tracteur (1) afin de permettre d'approcher au maximum ledit groupe de rotation (5) de la tête fonctionnelle (6) à relier.

10. Système de mouvement (10) pour n'importe quelle machine agricole, selon l'une quelconque des revendications précédentes, **caractérisé en ce que** la tête fonctionnelle (6) est maintenue à une distance prédéterminée du sol en raison d'un système de positionnement automatique commun.
